# EUROPÄISCHE PATENTSCHRIFT

(11) **EP 2 145 805 B1**
(45) Veröffentlichungstag und Bekanntmachung des Hinweises auf die Patenterteilung: **16.01.2019**
(21) Anmeldenummer: 09100327.7
(22) Anmeldetag: 10.06.2009
(51) Int. Cl.: B60S 1/04, B60S 1/24

(54) **Scheibenwischanlage mit Fixierbauteil und Fixierbauteil**
Windscreen wiper assembly with fixing component and fixing component
Installation d'essuie-glace dotée d'un composant fixable et composant fixable

(30) Priorität: 17.07.2008 DE 102008040517
(43) Veröffentlichungstag der Anmeldung: 20.01.2010
(73) Patentinhaber: Robert Bosch GmbH, 70442 Stuttgart (DE)
(72) Erfinder: Trenkle, Lothar, 77833, Ottersweier (DE); Hahn, Artur, 76135, Karlsruhe (DE)

(56) Entgegenhaltungen:
- DE-A1- 10 313 540

## Beschreibung

Die Erfindung betrifft eine Scheibenwischanlage und ein Fixierbauteil zur Sicherung der Lage einer Motorkurbel an einer Scheibenwischanlage nach der Gattung der nebengeordneten Ansprüche 1 und 9. Es ist bereits bekannt, dass Scheibenwischanlagen in der Regel von einem Zulieferbetrieb zusammengebaut und zur Fahrzeugmontage an einen Fahrzeughersteller geliefert werden. Wesentliche Bestandteile der Scheibenwischanlage sind eine Motorkonsole mit einem Elektromotor, eine Motorkurbel oder Kurbelplatte und ein Gestänge mit einem oder zwei Drehgelenken, auf denen ein beziehungsweise zwei Wischhebel montiert sind. Die Wischhebel tragen die Wischblätter, die schließlich von den Gelenkstangen betätigt werden.

Bei der Auslieferung befindet sich die Motorkurbel des Elektromotors in einer Grundstellung oder Parkstellung. In dieser Stellung soll die Scheibenwischanlage unverändert an einer Frontscheibe oder einer Heckscheibe eingebaut werden. Im weiteren Montageprozess der Scheibenwischanlage am Kraftfahrzeug wird dann noch der Elektromotor elektrisch angeschlossen und der Wischhebel mit dem Wischblatt aufgesetzt.

Es ist des weiteren bekannt, dass beispielsweise durch Erschütterungen während des Transports oder anderen Einflüssen die Antriebswelle des Elektromotors mit der Motorkurbel aus der ursprünglich vorgesehenen Parklage heraus bewegt wird. Wenn die Wischhebel montiert werden und der Elektromotor anschließend bestromt wird, stehen die Wischhebel nicht mehr in der gewünschten Parkposition, so dass unter Umständen eine zeitaufwändige Nacharbeit erforderlich sein kann. In diesem Fall müssen ein oder zwei Wischhebel demontiert und erneut in der richtigen Position montiert werden.

Die DE 10313540 A1 zeigt gattungsgemäße Merkmale.

Der Erfindung liegt die Aufgabe zugrunde, ein Verstellen der Motorkurbel während des Transports, der Lagerung und des Handlings beim Fahrzeughersteller zu vermeiden. Diese Aufgabe wird mit den kennzeichnenden Merkmalen der nebengeordneten Ansprüche 1 und 9 gelöst.

Bei dem Fixierbauteil bzw. bei der Scheibenwischanlage zur Sicherung der Lage der Motorkurbel mit den Merkmalen der nebengeordneten Ansprüche 1 und 11 ergibt sich der Vorteil, dass die bei der Montage der Scheibenwischanlage vorgegebene Lage der Motorkurbel unabhängig von der Behandlung während des Transports, der Lagerung oder während des Einbaus der Scheibenwischanlage mit Sicherheit zuverlässig eingehalten wird. Nach dem Einbau der Scheibenwischanlage muss lediglich noch der Wischhebel vorschriftsmäßig aufgesetzt werden. Eine Nachjustierung ist nicht erforderlich, so dass eine eventuell anfallende und zeitaufwändige Nacharbeit entfällt. Dabei wird als besonders vorteilhaft angesehen, dass die Motorkurbel mit einem einfach herstellbaren Fixierbauteil praktisch in jeder gewünschten Position arretiert werden kann. Das Fixierbauteil wird lediglich an einem feststehenden Teil der Scheibenwischanlage angeordnet und verhindert somit, dass die Motorkurbel bewegt werden kann. Nach der Montage der Scheibenwischanlage am Fahrzeug wird das Fixierbauteil entfernt, so dass anschließend die volle Beweglichkeit der Motorkurbel beziehungsweise des Wischhebels gewährleistet ist. Das Verbindungselement für das Fixierbauteil ist als Clips mit einer Rastnase, Haken, Stift oder als Klammer ausgebildet. Das Verbindungselement ist vorzugsweise am unteren Schenkel des Fixierbauteils angeordnet und greift in einen entsprechend ausgebildeten Durchbruch der Motorkonsole. Dadurch besteht zwischen dem Fixierbauteil und der feststehenden Motorkonsole eine feste Verbindung, über die eventuell auftretende Kräfte von der Motorkurbel abgeleitet werden können. Die Motorkurbel bleibt in jedem Fall arretiert.

Durch die in den abhängigen Ansprüchen 2 bis 8 aufgeführten Maßnahmen sind vorteilhafte Weiterbildungen und Verbesserungen des erfindungsgemäßen Fixierbauteils bzw. der Scheibenwischanlage gegeben. Ein erfindungswesentlicher Aspekt wird darin gesehen, dass das Fixierbauteil eine U-förmig ausgebildete Aufnahme aufweist. Die U-förmig ausgebildete Aufnahme wird durch zwei Schenkel gebildet, die gegenüberstehend angeordnet sind. Der Abstand zwischen den beiden Schenkeln bzw. deren Länge ist derart ausgebildet, dass die Motorkurbel umschlossen wird. In einer bevorzugten Ausführungsform wird die Motorkurbel durch Klemmen relativ zum feststehenden Gehäuseteil der Scheibenwischanlage fixiert. Dadurch wird auch eine zufällige Bewegung der Motorkurbel sicher vermieden.

Erfindungsgemäß ist des weiteren vorgesehen, dass bei der Demontage des Fixierbauteils das Verbindungselement beispielsweise durch einfaches Abziehen oder durch eine Kippbewegung entfernt werden kann. Dabei sind bei der Demontage auftretende Beschädigungen des Fixierbauteils ohne Bedeutung, da das Fixierbauteil nicht wieder benötigt wird.

Um einen sicheren Halt des Fixierbauteils auf der Motorkonsole zu erhalten, ist erfindungsgemäß vorgesehen, dass die Schenkel an ihrem freien Ende mit einer entsprechenden Auflagefläche ausgebildet sind.

In alternativer Ausgestaltung der Erfindung ist auch vorgesehen, dass die Schenkel des Fixierbauteils gegeneinander verdreht oder versetzt angeordnet sind. Dadurch wird eine Demontage des Fixierbauteils von der Motorkonsole erleichtert.

Erfindungsgemäß ist vorgesehen, dass das Fixierbauteil nach dem Einbau der Scheibenwischanlage am Fahrzeug mit einem Griff ausgebildet ist, der für eine manuelle oder maschinelle Montage bzw. Demontage des Fixierbauteils geeignet ist.

In weiterer Ausgestaltung der Erfindung ist vorgesehen, den Griff ringförmig als Öse oder alternativ hakenförmig auszubilden. Dadurch kann der Griff beispielsweise in die Hand genommen und das Fixierbauteil von der Motorkonsole einfach abgezogen werden. Das Fixierbauteil hat dann seine Aufgabe erfüllt und wird dann einfach entsorgt.

Erfindungsgemäß ist vorgesehen, das Fixierbauteil aus einem einfachen Kunststoff zu fertigen, so dass es preiswert herstellbar ist und gegebenenfalls recycelt werden kann. Drei Ausführungsbeispiele der Erfindung sind in der Zeichnung dargestellt und werden in der nachfolgenden Beschreibung näher erläutert.

Die Figuren 1 bis 3 zeigen drei unterschiedliche Ausführungsbeispiele eines erfindungsgemäßen Fixierbauteils,

Figur 4 a zeigt eine erfindungsgemäße Scheibenwischanlage mit einer Motorkonsole aus gestanztem Blech in einer perspektivischen Ansicht,

Figur 4b zeigt die obige Scheibenwischanlage in einer Seitenansicht,

Figur 5 zeigt einen Ausschnitt von der obigen Scheibenwischanlage mit der räumlichen Anordnung des Fixierbauteils und die

Figuren 6 und 7 zeigen ein weiteres erfindungsgemäßes Ausführungsbeispiel einer Scheibenwischanlage, bei der die Motorkonsole vorzugsweise aus Metall gegossen ist.

Das erfindungsgemäße Fixierbauteil ist vorzugsweise zum einmaligen Gebrauch ausgelegt und wird nach der Demontage nicht mehr weiter benötigt. Entsprechend der Erfindung wird das Fixierbauteil nach erfolgtem Zusammenbau der Scheibenwischanlage an der Scheibenwischanlage so befestigt, dass eine ungewollte Drehbewegung der Motorwelle des Elektromotors während des Transports, der Lagerung der Scheibenwischanlage oder deren Handling beim Einbau in ein Kraftfahrzeug mit Sicherheit verhindert wird. Insbesondere ist vorgesehen, dass das Fixierbauteil um eine Motorkurbel des Elektromotors gelegt und dadurch sowohl die Drehbewegung der Motorwelle des Elektromotors als auch des Gestänges der Scheibenwischanlage in ihrer vorgegebenen Grundstellung verhindert wird. Durch die feste Verbindung des Fixierbauteils mit einem feststehenden Teil der Scheibenwischanlage, insbesondere mit der Motorkonsole ist eine relative Bewegung der beweglichen Teile unterbunden.

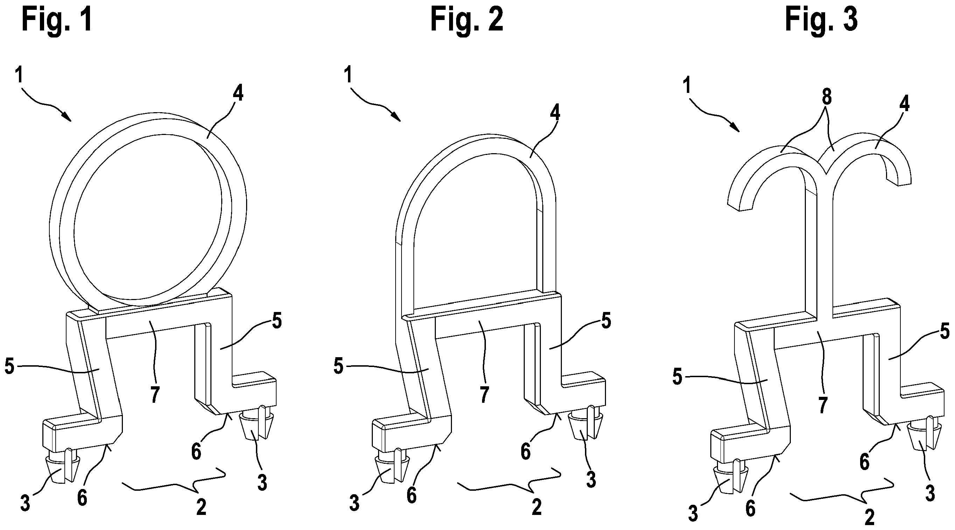

In den Figuren 1, 2 und 3 sind drei unterschiedliche Ausführungsbeispiele des erfindungsgemäßen Fixierbauteils dargestellt.

Figur 1 zeigt ein erstes Fixierbauteil 1, das mit einer Aufnahme 2 ausgebildet ist. Die Aufnahme 2 ist U-förmig ausgeformt und wird seitlich von zwei Schenkel 5 begrenzt. Der innere Abstand zwischen den beiden Schenkeln 5 entspricht dabei in etwa der Breite einer Motorkurbel 13, wie später noch näher erläutert wird. Erfindungsgemäß ist vorgesehen, dass der Abstand der beiden Schenkel 5 derart gewählt ist, dass die Motorkurbel 13 durch Klemmen fixiert wird. Alternativ kann der Abstand zwischen den beiden Schenkeln etwas größer gewählt werden, um vorgegebene Fertigungstoleranzen auszugleichen. Die beiden Schenkel 5 werden vorzugsweise parallel angeordnet. Alternativ ist vorgesehen, dass die Schenkel 5 mit einem vorgegebenen Winkel gegeneinander verschränkt angeordnet sind. Dadurch soll eine Demontage erleichtert werden.

Entsprechend Figur 1 sind die beiden Schenkel 5 an ihrem unteren Ende abgewinkelt, so dass sich eine vergrößerte Auflagefläche 6 ergibt. Durch das Verschränken der beiden Schenkel 5 und die vergrößerte Auflagefläche 6 ergibt sich des weiteren eine stabile Fixierung des Fixierbauteils 1 auf einer feststehenden Unterlage der Scheibenwischanlage. Erfindungsgemäß ist vorgesehen, das Fixierbauteil 1 auf der Motorkonsole anzuordnen.

Zur Befestigung des Fixierbauteils 1 auf der Motorkonsole der Scheibenwischanlage ist an den Auflageflächen 6 jeweils ein Verbindungselement 3 ausgebildet. Das Verbindungselement 3 ist als Clips mit einer Rastnase, als Haken, als Stift oder als Klammer ausgebildet und wird durch einfaches Stecken in einen entsprechend ausgebildeten Durchbruch der Motorkonsole der Scheibenwischanlage fest verankert. Erfindungswesentlich ist, dass das Fixierbauteil 1 auf der Motorkonsole derart fest verankert ist, dass es beispielsweise auch bei einem heftigen Stoß nicht abgelöst werden kann, sondern die Motorkurbel weiterhin in ihrer vorgesehenen Position fixiert.

Die Länge der beiden Schenkel 5 ist auf die Materialstärke der Motorkurbel und unter Berücksichtigung des Abstandes von der Motorkonsole abgestimmt.

Wie Figur 1 weiterhin entnehmbar, ist im oberen Teil des Fixierbauteils 1 ein Griff 4 angeordnet. Der Griff 4 ist als geschlossener Ring ausgebildet. Sowohl für die Montage als auch für die Demontage des Fixierbauteils kann somit auf sehr einfache Weise manuell oder mit Hilfe eines Werkzeugs, das in die durch den Ring gebildete Öffnung geführt wird, das Fixierbauteil auf der Motorkonsole befestigt beziehungsweise demontiert werden. Für die Demontage wird das Fixierbauteil durch Zug an dem Griff 4 gewaltsam von der Motorkonsole abgezogen, so dass in vielen Fällen das Verbindungselement 3 in der Regel zerstört wird. Da das Fixierbauteil 1 beispielsweise aus Kunststoff gespritzt und somit sehr preiswert ist, kann das Material recycelt oder entsorgt werden. Solange jedoch das Fixierbauteil 1 auf der Motorkonsole fixiert ist, werden von außen einwirkende Kräfte nicht auf die beweglichen Teile der Scheibenwischanlage übertragen, sondern über das Fixierbauteil 1 in die Motorkonsole abgeleitet. Die Motorkurbel bleibt somit weiterhin arretiert. Ein Verdrehen der Motorkurbel wird solange verhindert, bis die Scheibenwischanlage an der Front- oder der Heckscheibe eines Kraftfahrzeugs angebaut ist und das Fixierbauteil 1 von der Scheibenwischanlage entfernt wurde. Erst danach kann die Scheibenwischanlage ihre normale Funktion im Wischbetrieb aufnehmen.

In alternativer Ausgestaltung der Erfindung ist vorgesehen, dass das Fixierbauteil 1 derart dimensioniert ist, dass beim erstmaligen Einschalten des Elektromotors beispielsweise die Rastnasen des Verbindungselements 3 abbrechen und somit das Fixierbautei! 1 von selbst abfällt.

In der Regel wird die Anordnung des Fixierbauteils 1 auf der Motorkonsole derart ausgeführt, dass die Wischblätter der Scheibenwischanlage in einer Parkstellung stehen. Durch eine geänderte Position für die Befestigung auf der Motorkonsole kann alternativ jede beliebige Endposition vorgegeben werden. Eine Nacharbeit zur Korrektur der Position des Wischhebels ist nicht erforderlich.

Figur 2 zeigt ein zweites Ausführungsbeispiel des erfindungsgemäßen Fixierbauteils 1. Bei diesem Ausführungsbeispiel ist die Aufnahme 2 mit den beiden Schenkeln 5, den Auflageflächen 6 und dem Verbindungselement 3 in der gleichen Art ausgeführt, wie sie bereits in Figur 1 beschrieben wurde. Lediglich der Griff 4 wurde modifiziert. Der Griff 4 ist U-förmig ausgebildet, wobei die beiden U-förmigen Schenkel mit den Schenkeln 5 verbunden sind. Dadurch ergibt sich ebenfalls ein geschlossener Ring, mit dem das Fixierbauteil 1 sehr einfach montiert oder demontiert werden kann.

In Figur 3 ist ein drittes Ausführungsbeispiel des erfindungsgemäßen Fixierbauteils 1 dargestellt. Bei dem dritten Ausführungsbeispiel wurde an Stelle eines ringförmigen Griffes 4 der Griff 4 T-förmig oder hakenförmig ausgebildet. Der Fuß des Hakens ist mit einem durch die beiden Schenkel 5 begrenzten Bügel 7 fest verbunden. Am oberen Ende sind zwei gegenüberstehend angeordnete gebogene Haken 8 ausgebildet. Durch Ziehen oder Kippen der Haken 8 kann somit das Fixierbauteil 1 von seinen Haltepunkten auf der Scheibenwischanlage, insbesondere von der Motorkonsole gelöst werden. Das einfache Lösen wird auch durch die verschränkt angeordneten Schenkel 5 erleichtert, da durch Abkippen des Fixierbauteils 1 die Rastnasen 3 leichter aus ihrer Verankerung gezogen werden können oder dabei leichter abbrechen. Dieses trifft ebenfalls auf die beiden zuerst genannten Fixierbauteile zu.

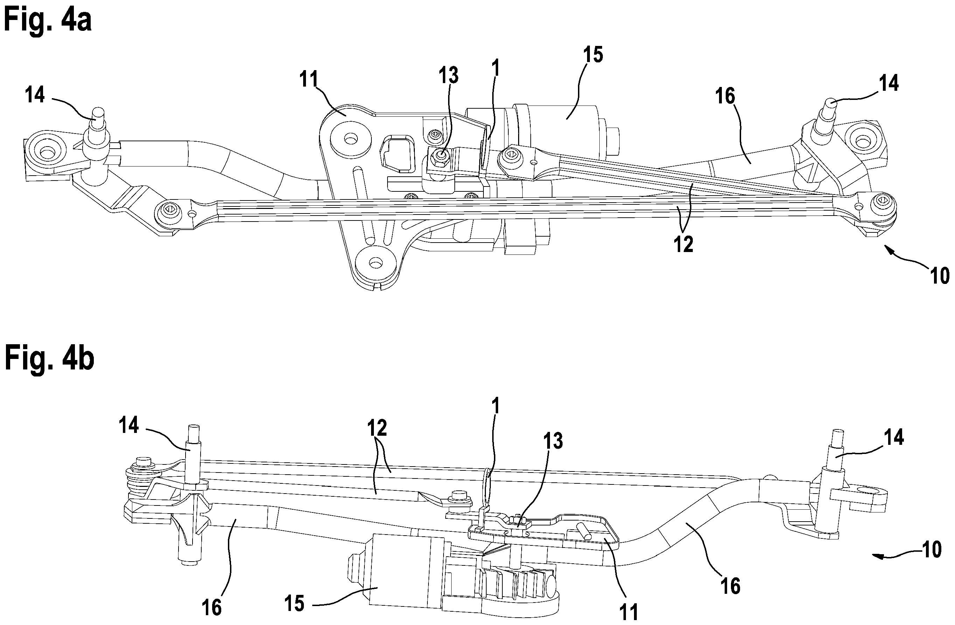

In Figur 4a ist eine erfindungsgemäße Scheibenwischanlage 10 in perspektivischer Draufsicht dargestellt. Die Scheibenwischanlage 10 weist einen Elektromotor 15 auf, an dem eine Motorkonsole 11 angeordnet ist. Die Motorkonsole 11 ist aus einem Blech gestanzt und mit Montagebohrungen entsprechend ausgeformt. Des weiteren ist an der Motorkonsole 11 ein Wischerträger 16 angeordnet, der als durchgehende Stange ausgebildet ist. An den beiden Enden des Motorträgers 16 sind zwei Lager für die Aufnahme von zwei Kurbeln 14 angeordnet. Die beiden Kurbeln 14 stehen über eine Gelenkstange 12 in Wirkverbindung. Des weiteren ist eine zweite Gelenkstange 12 vorgesehen, die von einer Motorkurbel 13 des Elektromotors 15 betätigt wird.

Wie bei der Scheibenwischanlage 10 der Figur 4a weiter entnehmbar, ist um die Motorkurbel 13 herum ein Fixierbauteil 1 angeordnet. Das Fixierbauteil 1 ist mit seinen Verbindungselementen mit der Motorkonsole 11 fest verbunden, wie später noch näher gezeigt wird.

Der Aufbau und die detaillierte Ausgestaltung der erfindungsgemäßen Scheibenwischanlage 10 entspricht den Bauvorschriften des Fahrzeugherstellers. In die Motorkonsole 11 sind lediglich zwei Durchbrüche angeordnet, an denen das Fixierbauteil 1 befestigt werden kann. Ansonsten entspricht die Scheibenwischanlage 10 den Herstellerangaben. Die Durchbrüche sind jedoch so angeordnet, dass sie weder die Funktion der Scheibenwischanlage 10 noch deren Gebrauch in irgendeiner Weise beeinflussen können, wenn das Fixierbauteil entfernt wurde. Das Fixierbauteil 1 wird entfernt, sobald die Scheibenwischanlage 10 im Fahrzeug fest eingebaut und mit elektrischen Anschlussleitungen für den Elektromotor 15 verbunden ist.

Figur 4b zeigt eine Seitenansicht der zuvor beschriebenen erfindungsgemäßen Scheibenwischanlage 10. In der Seitenansicht ist besonders deutlich zu erkennen, wie der Elektromotor 15 mit der Motorkonsole 11 fest verbunden ist. Des weiteren ist der Wischerträger 16 mit der Motorkonsole 11 verbunden. Durch eine Bohrung in der Motorkonsole 11 ist eine Achse des Elektromotors 15 oder dessen Getriebes geführt. Auf der Gegenseite der Motorkonsole 11 ist auf die Motorachse die Motorkurbel 13 aufgesetzt und fixiert, so dass ihr Hebelarm die Drehbewegung der Drehachse ausführt. Die beweglich angeordneten Gelenkstangen 12 werden von der Motorkurbel 13 alternierend bewegt. Des weiteren ist der Figur 4b entnehmbar, wie das Fixierbauteil 1 auf der Motorkonsole 11 angeordnet ist und die Motorkurbel 13 fest umschließt. Dadurch wird ein Verdrehen der Motorkurbel 13 und damit der Motorachse des Elektromotors 15 im Sinne der Erfindung zuverlässig verhindert.

Auf dem Wischerträger 16 sind zwei weitere Kurbeln 14 angeordnet, die von den beiden Gelenkstangen 12 betätigt werden und dabei die Wischarme (in Figur 4a, Figur 4b nicht dargestellt) mit den Wischblättern betätigen.

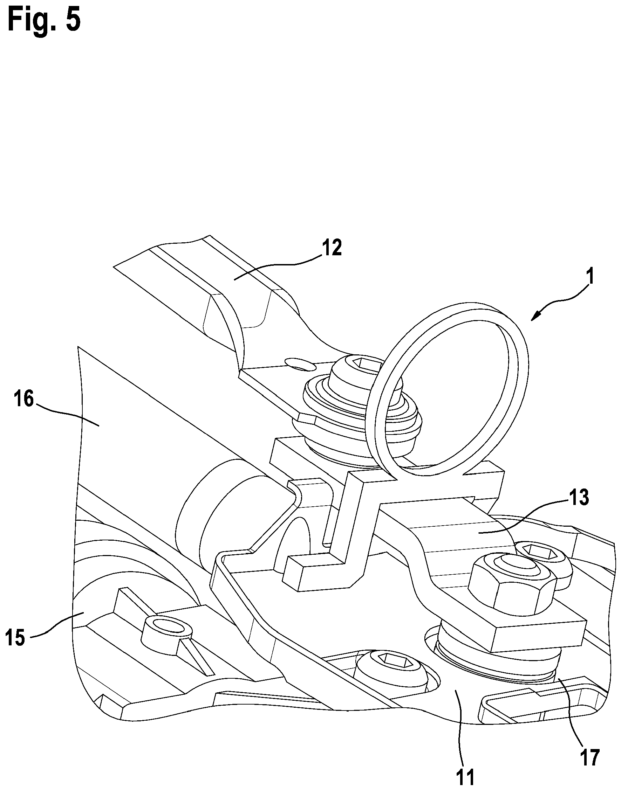

In Figur 5 ist in vergrößerter Darstellung ausschnittsweise die zuvor beschriebene Scheibenwischanlage 10 mit einer Blechkonsole 11 dargestellt, wie zu den Figuren 4 a und 4 b bereits erläutert wurde. Figur 5 zeigt den Bereich, der die Montage und Anordnung des Fixierbauteils 1 auf der Motorkonsole 11 im Detail wiedergibt. Die Motorkonsole 11 ist aus Blech gestanzt und geformt. Der Elektromotor 15 ist mit der Motorkonsole 11 verbunden, die weiterhin den Wischerträger 16 trägt. Die Motorachse ist durch einen Durchbruch 17 in der Motorkonsole 11 geführt und trägt die Motorkurbel 13. An der Motorkurbel 13 ist des weiteren die Gelenkstange 12 mittels eines Drehgelenks beweglich angeordnet. Das Fixierbauteil 1 ist mit seinen beiden Schenkeln um die Motorkurbel 13 geführt und mit Hilfe eines Verbindungselements mit der Motorkonsole 11 fest verbunden. Die Motorkurbel 13 ist somit in ihrer Position fixiert und kann nur bewegt werden, wenn das Fixierbauteil 1 entfernt wurde.

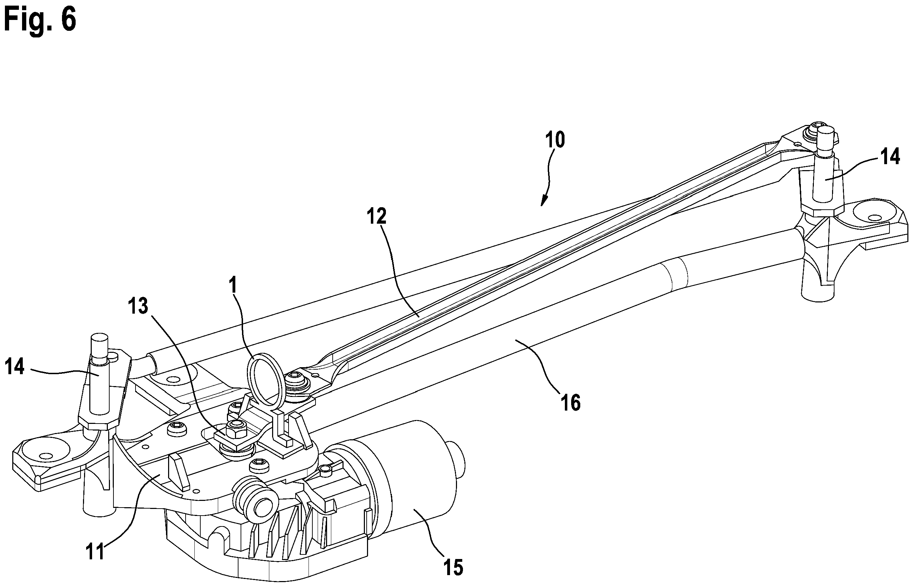

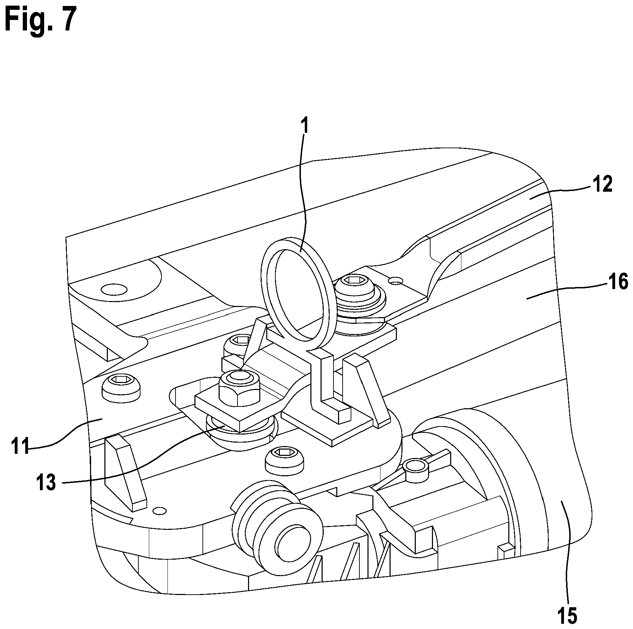

Die Figuren 6 und 7 zeigen ein weiteres Ausführungsbeispiel einer erfindungsgemäßen Scheibenwischanlage 10. In Figur 6 ist eine perspektivische Darstellung gewählt. Figur 6 zeigt einen vergrößerten Ausschnitt.

Wie Figur 6 entnehmbar ist, sind die einzelnen Komponenten der Scheibenwischanlage 10 in modifizierter Weise angeordnet. In diesem Fall wurde als Motorkonsole 11 eine Gussplatte verwendet, die mit dem rohrförmigen Wischerträger 16 verbunden ist. An die Motorkonsole 11 ist der Elektromotor 15 z.B. durch Verschrauben fest angeordnet. Die Motorachse ist durch einen Durchbruch in der Motorkonsole 11 geführt und trägt die Motorkurbel 13. Die Motorkurbel 13 ist wiederum über ein drehbares Gelenk mit den Gelenkstangen 12 drehbar verbunden. Die beiden Gelenkstangen 12 wirken auf zwei Kurbeln 14, die auf der Motorkonsole 13 bzw. auf dem Wischerträger 16 gelagert sind.

Figur 7 entspricht einem Ausschnitt von Figur 6, der insbesondere die Motorkonsole 11 mit dem Bereich der Motorkurbel 13 in vergrößertem Maßstab zeigt. Wie den beiden Figuren 6, 7 weiter entnehmbar, ist um die Motorkurbel 13 das erfindungsgemäße Fixierbauteil 1 derart geführt, dass es von den beiden Schenkeln vorzugsweise durch Klemmung umschlungen wird. Der linke Teil des Schenkels ist mit einer verschränkt oder auch mit einer Sollbruchstelle ausgebildet, an der das Fixierbauteil 1 bei der Demontage abbricht und somit das Fixierbauteil 1 leichter demontiert werden kann. Die Funktion ist die gleiche, wie sie zuvor im ersten Ausführungsbeispiel der Scheibenwischanlage 10 erläutert wurde.

## Patentansprüche

1. Scheibenwischanlage (10) mit einer Motorkonsole (11) und mit einem Elektromotor (15), auf dessen Achse (14) eine Motorkurbel (13) angeordnet ist wobei an der Motorkonsole (11) ein Fixierbauteil (1) angeordnet ist, wobei das Fixierbauteil (1) eine Aufnahme (2) aufweist und die Aufnahme (2) ausgebildet ist, die Motorkurbel (13) in ihrer relativen Lage zu einem feststehenden Teil der Scheibenwischanlage (10) zu arretieren, wobei das Fixierbauteil (1) ein Verbindungselement (3) zum Befestigen an der Scheibenwischanlage (10) aufweist und das Verbindungselement (3) lösbar ausgebildet ist, **dadurch gekennzeichnet, dass** das Verbindungselement (3) als Clips mit einer Rastnase, mit einem Haken, als Stift oder als Klammer ausgebildet ist.

2. Scheibenwischanlage nach Anspruch 1, **dadurch gekennzeichnet, dass** die Aufnahme (2) zwei sich gegenüberstehende Schenkel (5) aufweist, die an einem Bügel (7) befestigt und U-förmig angeordnet sind.

3. Scheibenwischanlage nach Anspruch 1 oder 2, **dadurch gekennzeichnet, dass** der Abstand und/oder die Länge der beiden Schenkel (5) an die Breite beziehungsweise an den Querschnitt der Motorkurbel (13) derart angepasst ist, dass die Motorkurbel (5) umschlossen und durch Klemmen fixiert ist.

4. Scheibenwischanlage nach einem der vorhergehenden Ansprüche, **dadurch gekennzeichnet, dass** die Schenkel (5) an ihrem freien Ende mit einer Auflagefläche (6) ausgebildet sind.

5. Scheibenwischanlage nach einem der vorhergehenden Ansprüche, **dadurch gekennzeichnet, dass** die Schenkel (5) gegeneinander verdreht oder versetzt angeordnet sind.

6. Scheibenwischanlage nach einem der vorhergehenden Ansprüche, **dadurch gekennzeichnet, dass** das Fixierbauteil (1) einen Griff (4) aufweist, der für eine manuelle oder maschinelle Montage und/oder Demontage des Fixierbauteils (1) ausgebildet ist.

7. Scheibenwischanlage nach Anspruch 86, **dadurch gekennzeichnet, dass** der Griff (4) ringförmig, als Öse oder hakenförmig ausgebildet ist.

8. Scheibenwischanlage nach einem der Ansprüche 1 bis 7, **dadurch gekennzeichnet, dass** an der Motorkonsole (11) wenigstens ein Durchbruch (17) zur Befestigung des Fixierbauteils (1) angeordnet ist.

9. Fixierbauteil zur Sicherung der Lage einer Motorkurbel (13) an einer Scheibenwischanlage (10) während des Transports, der Lagerung und/oder der Weiterverwendung, wobei
- das Fixierbauteil (1) eine Aufnahme (2) aufweist und
- die Aufnahme (2) ausgebildet ist, die Motorkurbel (13) in ihrer relativen Lage zu einem feststehenden Teil der Scheibenwischanlage (10) zu arretieren, wobei das Fixierbauteil (1) ein Verbindungselement (3) zum Befestigen an der Scheibenwischanlage (10) aufweist und
- das Verbindungselement (3) lösbar ausgebildet ist.
- **dadurch gekennzeichnet, dass** das Verbindungselement (3) als Clips mit einer Rastnase, mit einem Haken, als Stift oder als Klammer ausgebildet ist.

## Claims

1. Windscreen wiper system (10) with a motor bracket (11) and with an electric motor (15), on the axle (14) of which a motor crank (13) is arranged, wherein a fixing component (1) is arranged on the motor bracket (11),
- wherein the fixing component (1) has a receptacle (2) and
- the receptacle (2) is designed to lock the motor crank (13) in its position relative to a stationary part of the windscreen wiper system (10), wherein the fixing component (1) has a connecting element (3) for fastening to the windscreen wiper system (10), and the connecting element (3) is designed so as to be releasable, **characterized in that** the connecting element (3) is in the form of clips with a latching lug, with a hook, in the form of a pin or in the form of a clamp.

2. Windscreen wiper system according to Claim 1, **characterized in that** the receptacle (2) has two opposite limbs (5) which are fastened to a frame (7) and are arranged in a U-shaped manner.

3. Windscreen wiper system according to Claim 1 or 2, **characterized in that** the distance between and/or the length of the two limbs (5) is adapted to the width or to the cross section of the motor crank (13) in such a manner that the motor crank (5) is enclosed and fixed by clamping.

4. Windscreen wiper system according to one of the preceding claims, **characterized in that** the limbs (5) are formed at their free end with a supporting surface (6).

5. Windscreen wiper system according to one of the preceding claims, **characterized in that** the limbs (5) are arranged rotated or offset in relation to each other.

6. Windscreen wiper system according to one of the preceding claims, **characterized in that** the fixing component (1) has a handle (4) which is designed for manual or mechanical installation and/or removal of the fixing component (1).

7. Windscreen wiper system according to Claim 6, **characterized in that** the handle (4) is of annular design, is in the form of an eyelet or is of hook-shaped design.

8. Windscreen wiper system according to one of Claims 1 to 7, **characterized in that** at least one aperture (17) for fastening the fixing component (1) is arranged on the motor bracket (11).

9. Fixing component for securing the position of a motor crank (13) on a windscreen wiper system (10) during transport, mounting and/or further use, wherein
- the fixing component (1) has a receptacle (2), and
- the receptacle (2) is designed to lock the motor crank (13) in its position relative to a stationary part of the windscreen wiper system (10), wherein the fixing component (1) has a connecting element (3) for fastening to the windscreen wiper system (10), and
- the connecting element (3) is designed so as to be releasable,
- **characterized in that** the connecting element (3) is designed as clips with a latching lug, with a hook, as a pin or as a clamp.

## Revendications

1. Installation d'essuie-glace (10) avec une console de moteur (11) et avec un moteur électrique (15), sur l'axe (14) duquel est disposée une manivelle de moteur (13), dans laquelle un composant de fixation (1) est disposé sur la console de moteur (11), dans laquelle le composant de fixation (1) présente un logement (2) et le logement (2) est configuré pour arrêter la manivelle de moteur (13) dans sa position relative par rapport à une pièce stationnaire de l'installation d'essuie-glace (10), dans laquelle le composant de fixation (1) présente un élément d'assemblage (3) pour la fixation à l'installation d'essuie-glace (10) et l'élément d'assemblage (3) est réalisé sous forme amovible, **caractérisée en ce que** l'élément d'assemblage (3) est réalisé sous forme de clip avec un ergot d'encliquetage, avec un crochet, sous forme de broche ou sous forme d'attache.

2. Installation d'essuie-glace selon la revendication 1, **caractérisée en ce que** le logement (2) présente deux branches opposées l'une à l'autre (5), qui sont fixées à un étrier (7) et qui sont disposées en forme de U.

3. Installation d'essuie-glace selon la revendication 1 ou 2, **caractérisée en ce que** la distance et/ou la longueur des deux branches (5) est adaptée à la largeur ou à la section transversale de la manivelle de moteur (13), de telle manière que la manivelle de moteur (5) soit entourée et soit fixés par serrage.

4. Installation d'essuie-glace selon l'une quelconque des revendications précédentes, **caractérisée en ce que** les branches (5) sont réalisées avec une face d'appui (6) à leur extrémité libre.

5. Installation d'essuie-glace selon l'une quelconque des revendications précédentes, **caractérisée en ce que** les branches (5) sont tournées ou décalées l'une par rapport à l'autre.

6. Installation d'essuie-glace selon l'une quelconque des revendications précédentes, **caractérisée en ce que** le composant de fixation (1) présente une poignée (4), qui est configurée pour un montage et/ou un démontage manuel ou mécanisé du composant de fixation (1).

7. Installation d'essuie-glace selon la revendication 6, **caractérisée en ce que** la poignée (4) est réalisée sous forme d'anneau, d'oreille ou sous forme de crochet.

8. Installation d'essuie-glace selon l'une quelconque des revendications 1 à 7, **caractérisée en ce qu'**au moins une percée (17) est disposée sur la console de moteur (11) pour la fixation du composant de fixation (1).

9. Composant de fixation pour la fixation de la position d'une manivelle de moteur (13) à une installation d'essuie-glace (10) pendant le transport, le stockage et/ou la réutilisation, dans lequel
- le composant de fixation (1) présente un logement (2) et
- le logement (2) est configuré pour arrêter la manivelle de moteur (13) dans sa position relative par rapport à une pièce stationnaire de l'installation d'essuie-glace (10), dans lequel le composant de fixation (1) présente un élément d'assemblage (3) pour la fixation à l'installation d'essuie-glace (10) et
- l'élément d'assemblage (3) est réalisé sous forme amovible,
- **caractérisé en ce que** l'élément d'assemblage (3) est réalisé sous forme de clip avec un ergot d'encliquetage, avec un crochet, sous forme de broche ou sous forme d'attache.
